# EUROPÄISCHE PATENTSCHRIFT

(11) **EP 0 982 505 B1**
(45) Veröffentlichungstag und Bekanntmachung des Hinweises auf die Patenterteilung: **01.06.2005**
(21) Anmeldenummer: 99114865.1
(22) Anmeldetag: 29.07.1999
(51) Int. Cl.: F16C 1/26

(54) **Seilhülle für Bowdenzüge**
Cable sheath for a cable control device
Gaine pour un dispositif de commande par câble

(30) Priorität: 27.08.1998 DE 19839104
(43) Veröffentlichungstag der Anmeldung: 01.03.2000
(73) Patentinhaber: W.L. GORE & ASSOCIATES GmbH, 85640 Putzbrunn (DE)
(72) Erfinder: Schreier, Toni, 83703 Festenbach (DE)
(74) Vertreter: Klunker . Schmitt-Nilson . Hirsch

(56) Entgegenhaltungen:
- FR-A- 1 371 794
- FR-A- 1 386 014
- GB-A- 1 060 287
- US-A- 3 238 808
- US-A- 4 099 425
- US-A- 4 898 046
- US-A- 5 161 427
- US-A- 5 243 876
- US-A- 5 245 887
- US-A- 5 636 551
- PATENT ABSTRACTS OF JAPAN vol. 009, no. 209 (M-407), 27. August 1985 (1985-08-27) & JP 60 069315 A (NIPPON CABLE SYSTEM KK), 20. April 1985 (1985-04-20)

## Beschreibung

Die Erfindung betrifft eine Seilhülle für ein Bowdenzugsystem, insbesondere für Zweiräder, wobei die Seilhülle einen Stützschlauch, mindestens eine von einer Seelenumhüllung umgeben strangförmige Seele, die um den Stützschlauch gewickelt ist, und eine Außenhülle, die den Stützschlauch mit den gewickelten Seelen konzentrisch umgibt, umfaßt. Die Erfindung betrifft desweiteren ein Verfahren zur Herstellungs der Seilhülle sowie ein Bowdenzugsystem, mit einer solchen Seilhülle.

Mit Bowdenzugsystemen werden solche Seilzugsysteme bezeichnet, die sich dadurch auszeichnen, daß ein Seilzug in geradlinigen sowie in Umlenkungs- oder Krümmungsbereichen des Seilzugsystems von einem druckbelastbaren Gehäuse umgeben ist. In geradlinigen Bereichen kann auf das Gehäuse verzichtet werden, falls vor oder nach diesem Bereich die Gehäusebereiche durch örtlich fixierte Gegenhalter fixiert sind. Das Gehäuse ist an seinen beiden Enden örtlich fixiert ist, damit es Druckkräfte aufnehmen kann, die auftreten, wenn sich der Seilzug aufgrund einer Zugbelastung gegen die Innenwandung des Gehäuses abstützt. Demgemäß besteht ein Bowdenzugsystem grundsätzlich aus einem durchgehenden Seilzug, typischerweise einem Drahtseil aus Stahldrähten, und einem oder mehreren Gehäusebereichen, sogenannten Seilhüllen, die den Seilzug umgeben.

Das Drahtseil kann aus Reibungs- und Wartungsgründen mit einer polymeren Umhüllung oder Beschichtung versehen sein. Es ist in diesem Zusammenhang auch bekannt, das ggf. polymerbeschichtete Drahtseil über seine gesamte Länge in der rohrförmigen Zwischenlage, einem sogenannten "Liner", zu führen, um einerseits die Reibung in den gekrümmten Bereichen des Seilzugsystems zu vermindern und andererseits Umwelteinflüsse über die gesamte Drahtseillänge von dem Drahtseil fernzuhalten. Ein solches Seilzugsystem ist in DE 42 94 444 C2 beschrieben.

Die druckaufnehmende Seilhülle, in der der Seilzug mit oder ohne Liner geführt wird, besteht im einfachsten Fall aus einem oder mehreren relativ stabilen gewickelten Stahldrähten, die von einer polymeren Außenhülle umgeben sind, um den nötigen radialen Halt zu geben. Diese Ausführung gewährleistet die notwendige Flexibilität der Seilhülle bei axialer Druckstabilität. Bei Anwendungsfällen, in denen hohe axiale Kompressionskräfte auf die Seilhülle wirken, wie z. B. im Falle von Bremszügen etc., ist nur ein Stahldraht mit geringer Steigung so gewickelt, daß die einzelnen Wickelungen aneinandergrenzen. Die höhere Kompressionssteifigkeit in axialer Richtung wird durch Verwendung mehrerer parallel gewickelter Stahldrähte mit entsprechend höherer Steigung erzielt. Damit einher geht jedoch auch eine Abnahme der axialen Druckstabilität in der axialen Richtung der Seilhülle. In Anwendungsfällen, bei denen die axialen Druckstabilität nicht so hoch angesetzt werden muß, wie z. B. bei Schaltzügen und dergleichen, ist daher die Verwendung mehrerer, parallel gewickelter Stahldrähte üblich. Insbesondere bei der Verwendung mehrerer, parallel gewickelter Stahldrähte hat sich die zusätzliche Verwendung eines inneren Stützschlauchs als nützlich erwiesen, um den die Stahldrähte gewickelt werden.

Die Stahldrähte der Seilhülle werden vielfach auch als "Seelen" bezeichnet. Die Seelen können ihrerseits aus einer Vielzahl von verdrillten oder parallelen Einzeldrähten bestehen. Aus der JP-A-62-141305 (Ishida) ist eine Seilhülle bekannt, welche eine Vielzahl von aus Fasern bestehenden Seilhüllenseelen aufweist.

Die Seilzüge bestehend aus Drahtseil mit polymerer Umhüllung in Kombination mit den beschriebenen Seilhüllen bestehend aus Stützschlauch, um den Stützschlauch gewickelten Seelen und polymerer Außenhülle werden mit oder ohne Liner z. B. als Bremszüge bzw. im Falle von mehr oder minder achsparallel gewickelter Seelen vorzugsweise als Schaltzüge von Fahrrädern eingesetzt. Sie können aber auch in anderen Bowdenzugsystemen eingesetzt werden, wie Kupplungszügen etc.

Ein Problem sowohl der Seilzüge als auch der Seilhüllen, insbesondere der Seilhüllen mit mehreren, parallel gewickelten Seelen, tritt bei ihrer Montage auf. Denn sowohl Seilzug als auch Seilhülle müssen vor der Montage auf die gewünschte Bereichslänge gekürzt werden, wobei beim Ablängen die Struktur der Seilzüge und der Seilhüllen zerstört wird.

Soweit der Seilzug betroffen ist, führt die Zerstörung der Struktur zu einem Aufspleißen der Drähte in dem Drahtseil des Seilzugs. Dies führt nicht nur leicht zu Verletzungen durch freistehende gratige Drahtenden, sondern erschwert außerdem das Einfädeln des Seilzugs in die Seilhülle und das Befestigen des Seilzugs in vorgegebenen Fixiereinrichtungen. Solche Fixiereinrichtungen z. B. am Rahmen eines Fahrrads oder in Schaltgriffen am Lenker sind entsprechend dem Durchmesser des Seilzugs bemessen, so daß abstehende Drahtenden des Seilzugs hinderlich sind.

Soweit die Seilhülle betroffen ist, führt die Zerstörung der Struktur zu scharfen Graten an den Seelenenden der Seilhülle, was bei Verwendung von Stahldrähten als Seele besonders zum Tragen kommt. Diese scharfen Grate verletzen jegliche Seilzugbeschichtung und/oder des ggf. vorhandenen Liners, da sich der herkömmliche Stützschlauch aufgrund der zerstörten Seilhüllenstruktur aus diesem Schnittbereich zurückzieht und somit keinen Schutz für die Zugseilbeschichtung mehr bietet.

Es ist daher erstrebenswert, eine Seilhülle für ein Bowdenzugsystem zur Verfügung zu stellen, bei dem eine Zerstörung der Struktur beim Ablängen der Seilzugdrähte einerseits und der Seilhüllenseelen andererseits weitgehend verhindert wird. So ist es beispielsweise aus der US 3,238,808 bekannt, bei der Verwendung von Stahldrähten als Seele die Stahldrähte mit Kunststoff zu beschichten, und aus der GB 1,060,287 bekannt, Fäden aus Glasfaserfilamenten mit einer extrudierten Kunststoffmatrix zu versehen, der einerseits die Filamente miteinander verklebt und andererseits den Fäden eine glatte Außenfläche verleiht.

Die vorliegende Erfindung versucht aber gleichzeitig, weitere Nachteile der bekannten Bowdenzugsysteme zu vermeiden. So besteht ein ständiges Problem in der Korrosionsanfälligkeit der in einem Bowdenzugsystem verwendeten Materialien. Das Vorsehen eines Liners reicht zur Lösung dieses Problems nicht aus, da damit zwar Schmutzpartikel, nicht aber Luftfeuchtigkeit von den korrosionsanfälligen Bauteilen ferngehalten wird. Die Luftfeuchtigkeit führt darüberhinaus bei einigen Polymeren, die z. B. als Stützschlauch für die Stahldrahtseelen verwendet werden, zum Quellen, so daß sich der Innendurchmesser der Seilhülle verkleinert, was wiederum zu einer erhöhten Reibung mit dem Seilzug führen kann. Ein weiteres Streben insbesondere auf dem Fahrradsektor besteht in der Einsparung von Gewicht. Die Verwendung anderer Materialien ist aber aus Stabilitätsgründen kritisch, und insbesonderte ist dabei zu beachten, daß die Seilhülle einer ständigen Biegewechselbelastung ausgesetzt ist, denen auf Dauer nicht jedes Material und jede Konstruktion gewachsen ist. Als allgemeine Anforderung an Seilzughüllen gilt desweiteren, daß diese UV-stabil (Licht im ultravioletten Wellenlängenbereich) und Ozon-stabil sein müssen, da der UV- und Ozoneinfluß bei vielen Kunststoffmaterialien zu einer vorzeitigen Alterung führt. Schließlich ist es das Bestreben, daß Gleitverluste in der Seilhülle, sowie zwischen Seilzug und Seilhülle möglichst lang gering gehalten werden. Zwar kann das Anordnen eines Liners zwischen Seilzug und Seilhülle die Reibung zum großen Teil reduzieren, jedoch ist eine weitere Reduzierung der Oberflächenreibung und auch der inneren Reibung wünschenswert.

Die Erfindung wird durch die Merkmale der unabhängigen Ansprüche definiert. Durch weitere Ausgestaltung gemäß den Merkmalen der abhängigen Ansprüche wird den weiteren Problemen und Zielsetzungen Rechnung getragen.

Auch bei der erfindungsgemäßen Seilhülle sind die einzelnen Seelen von einer Seelenumhüllung umgeben sind. In Kombination mit dem Stützschlauch und der Außenhülle wird dadurch sichergestellt, daß das Durchtrennen der Seilhülle, um diese auf Maß zu kürzen, nicht zu einem Aufspleißen der die Seele bildenden Fasern führt. Dieses Ziel wird um so besser erreicht, je inniger die Verbindung zwischen Seelenumhüllung und Seele ist und je härter das Material der Seelenumhüllung ist. Eine innige Verbindung zwischen Seele und Seelenumhüllung wird vorzugsweise durch Koextrusion im Schlauchextrusionsverfahren mit einem Polymermaterial erreicht, wobei die Oberfläche der Rohseele vorzugsweise rauh sein sollte. Die Rauhigkeit sollte zwischen Rz = 2 und Rz = 10 liegen, vorzugsweise etwa bei Rz = 6. Zur Schlauchextrusion eignen sich insbesondere die Polymere Polyacrylsulfon (PAS), Polyester (PES), Polyamid (PA), Polyetheretherketon (PEEK), Liquid Chrystal Polymer (LCP) sowie Verbindungen mit diesen Polymeren, wobei das Polymer PEEK oder eine Polymerverbindung mit PEEK wegen seiner besonderen Härte bevorzugt wird. Das PEEK vereinigt darüber hinaus besser als andere Polymere wesentliche Eigenschaften, die den eingangs genannten Problemen und Zielsetzungen gerecht werden. So ist PEEK bezogen auf sein Volumengewicht sehr hart, so daß sich relativ harte Seelenumhüllungen selbst mit dünner Wandstärke herstellen lassen, was hinsichtlich des begrenzten, zur Verfügung stehenden Raumes wesentlich ist. Die Härte ist nicht nur notwendig, um die Seele fest zusammenzuhalten, sondern auch um insbesondere axiale Druckbelastung mitaufnehmen zu können. Dies ist wesentlich, da aufgrund des begrenzten Raumangebots eine Umhüllung der Seele ohne Reduzierung des Seelendurchmessers nicht immer möglich ist, so daß die Seelenumhüllung selbst einen Teil der Druckbelastung aufnehmen muß. Desweiteren weisen die genannten Polymere und insbesondere PEEK eine hohe Biegewechselfestigkeit auf und sind UV- und Ozon-stabil, so daß diese Eigenschaft auch noch nach langer Zeit erhalten bleibt. Schließlich quillt dieses Material auch nicht, so daß Durchmesserschwankungen im Laufe der Zeit nicht zu befürchten sind.

Mit der Seelenumhüllung werden noch zwei weitere wesentliche Vorteile erzielt, indem nämlich einerseits die einzelne Seele wesentlich besser vor Korrosion geschützt wird und indem andererseits Reibungsverluste zwischen den einzelnen Seelen vermindert werden. Aufgrund der ständigen Biegewechselbelastung einer Seilhülle sind die auf den Stützschlauch gewickelten Seelen nämlich einer ständigen Relativbewegung ausgesetzt, die zu Reibungsverlusten und Verschleiß führt. Es hat sich nun herausgestellt, daß die Reibungsverluste durch die Seelenumhüllung und insbesondere durch Verwendung einer Seelenumhüllung aus PEEK stark reduziert werden können. PEEK hat ganz ausgezeichnete Reibungsbeiwerte, die es aufgrund seiner besonderen Härte auch über lange Zeit beibehält, da es nicht verschleißt.

Diese Eigenschaften des PEEK sind auch wesentlich für den erfindungsgemäßen Seilzug. Auch der Seilzug, der typischerweise aus einem Drahtseil aus Stahldrähten besteht, wird vorzugsweise durch Koextrusion im Schlauchextrusionsverfahren mit PEEK oder einer Polymerverbindung mit PEEK beschichtet. Durch die der Extrusion nachfolgende Abkühlung des extrudierten Polymermaterials besteht der Verbund aus Seil- und Seilbeschichtung unter einer natürlichen Vorspannung, wodurch sich ein besonders effektiver Verbund ergibt. Dieser effektive Verbund, der durch eine rauhe Oberfläche des Seilmaterials noch verbessert werden kann, ist im Zusammenspiel mit der besonderen Härte des Beschichtungsmaterials sehr wichtig für die Schneidcharakteristik des Seilzugs. Denn dadurch wird ein Abquetschen beim Schneiden des Seilzugs verhindert, so daß es weder zu einer Gratbildung an dem Seilmaterial noch zu einem Ausfasern des Seilmaterials kommen kann. Dies gilt im selben Maße für die zuvor beschriebene Seelenumhüllung, wobei aufgrund der die Seelen umgebenden Stützschlauchs und Außenhülle bereits eine gewisse Stabilität gegeben ist, so daß die Verwendung von PEEK als Material für die Seelenumhüllung lediglich als bevorzugte Ausführung anzusehen ist.

Vorzugsweise wird die einzelne Seele nicht aus einem Stahldraht oder einem Bündel von Einzeldrähten gebildet, sondern besteht aus einer Matrix mit darin eingebetteten Fasern, einem sogenannten Faserverbundwerkstoff. Die Verwendung von Faserverbundsträngen als Seelenmaterial wäre problematisch, wenn eine Seelenumhüllung nicht vorgesehen wäre. Denn ein Ablängen der Seilhülle würde zu einem Ausbröckeln der Matrix aus dem Verbundmaterial führen, was durch die Seelenumhüllung weitgehend verhindert wird. Als Matrixmaterial kann Epoxid oder Polyester dienen, während die Fasern Glas-, Kohlenstoff-, PEEKoder Aramidfasern umfassen können. Besonders geeignet sind Glasfasern und gegebenenfalls PEEK-Fasern, da diese Materialien isotrop sind und insbesondere in jeder Richtung auch druckbelastbar sind. Faserverbundwerkstoffe besitzen darüberhinaus bekanntermaßen eine hohe spezifische Festigkeit, und die Komponenten lassen sich so aufeinander abstimmen, daß auch eine hohe Biegewechselfestigkeit erreichbar ist. Es ist möglich, Stränge aus solchen Faserverbundwerkstoffen herzustellen, die einen konstanten Durchmesser aufweisen und insbesondere eine rauhe Oberfläche besitzen, so daß eine Verbindung mit der vorzugsweise schlauchextrudierten Seelenumhüllung aus Polymermaterial zu einem besonders guten Verbund führt. Solche polymerumhüllten Seelen aus Faserverbundwerkstoff sind korrosionsbeständig, vergleichsweise leicht, druckbelastbar ohne Kompressionserscheinungen und lassen sich gut schneiden, insbesondere wenn für die Seelenumhüllung ein hartes Polymer wie z.B. PEEK verwendet wird. Eine Reibung zwischen den einzelnen Fasern innerhalb einer Seele wird durch den Faserverbund verhindert, während Reibung zwischen den einzelnen Seelen aufgrund der Seelenumhüllung mit niedrigem Reibkoeffizient auf ein geringes Maß reduziert ist. Die Verwendung von Faserverbundwerkstoffen als Seelenmaterial ist somit besonders vorteilhaft, wobei insbesondere Glasfasermaterial mit Epoxidmatrix bevorzugt wird.

Zwischen den auf den Stützschlauch gewickelten Seelen mit Seelenumhüllung und der Außenhülle ist erfindungsgemäß noch eine Gleitschicht angeordnet, die zwei Funktionen hat. Einerseits dient sie der Verminderung der Reibung zwischen den mit der Seelenumhüllung umhüllten Seelen und der Außenhülle, weswegen sie vorzugsweise aus einem gereckten Polytetrafluorethylenematerial (ePTFE) besteht, und andererseits läßt sich dadurch die Handhabung der Seilhülle bei ihrer Herstellung vereinfachen. Denn beim Wickeln der Seelen um den Stützschlauch, insbesondere beim nahezu achsparallelen Wickeln mit großen Windungshöhen, stellt sich das Problem, daß sich die Seelen verschieben, übereinanderlegen oder endseitig auffächern. Da es aus verfahrenstechnischen Gründen schwierig ist, unmittelbar nach dem Wickeln der Seelen um den Stützschlauch die Seilhülle mit einer Außenhülle zu komplettieren, werden die mit den Seelen gewickelten Stützschläuche regelmäßig zunächst zwischengelagert. Es ist aber verfahrenstechnisch kein Problem, unmittelbar im Anschluß an das bzw. gleichzeitig mit dem Wickeln der Seelen um den Stützschlauch eine Folie z.B. aus gerecktem Polytetrafluorethylen im Längseinlauf mit dem Gesamtverbund zu wickeln. Beim Transport und der Zwischenlagerung wird so ein Verschieben, Übereinanderlegen oder Auffächern der Seelen wirksam unterbunden. Die Dicke einer solchen Gleitschicht aus ePTFE liegt vorzugsweise im Bereich von 0,07 bis 0,086 mm und macht sich daher im Durchmesser der Gesamtanordnung kaum bemerkbar.

Weitere Vorteile und Eigenschaften der Erfindung werden nachfolgend anhand der Beschreibung besonderer, in den Figuren dargestellten Ausfiüvungsforrnen der Erfindung erkennbar. In den Figuren bedeuten:
Fig. 1 zeigt einen Querschnitt durch ein erfindungsgemäßes Bowdenzugsystem mit 10 Seelen.
Fig. 2 zeigt ein weiteres erfindungsgemäßes Bowdenzugsystem mit 13 Seelen.
Fig. 3 zeigt schematisch den Aufbau des erfindungsgemäßen Bowdenzugsystems.
Fig. 4 zeit den Aufbau einer Seele im Querschnitt.

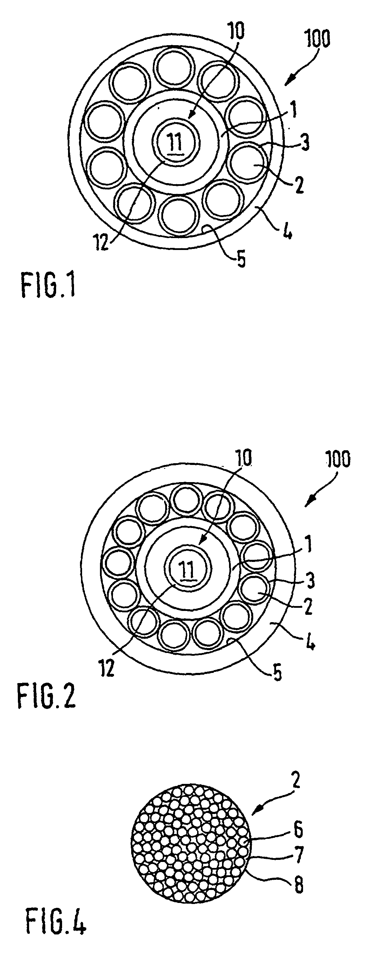

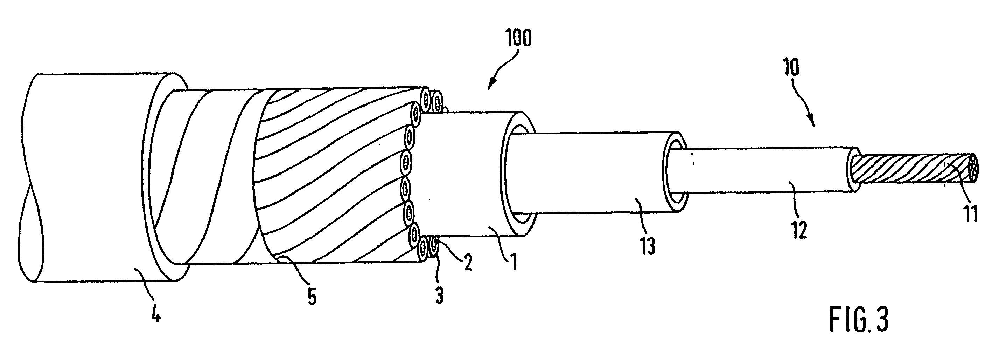

Fig. 1 und Fig. 2 zeigen jeweils im Querschnitt zwei Ausführungformen des erfindungsgemäßen Bowdenzugsystems in proportionaler Darstellung bestehend aus einem Seilzug 10 und einer Seilhülle 100 in etwa 10-facher Vergrößerung. Diese Bowdenzugsysteme und insbesondere die Seilhülle 100 werden vorzugsweise für Fahrräder verwendet und zwar insbesondere für Schaltzüge. Fig. 3 zeigt schematisch den Aufbau des Bowdenzugsystems.

Die Seilhülle 100 besteht aus einem Stützschlauch 1, mehreren strangförmigen Seelen 2, die um den Stützschlauch herum angeordnet sind und jeweils mit einer Seelenumhüllung 3 umgeben sind, und einer Außenhülle 4, die den Stützschlauch 1 mit den Seelen 2 konzentrisch umgibt. Die Seelen 2 sind um den Stützschlauch 1 gewickelt. Der Stützschlauch 1 hat im wesentlichen die Funktion, die Seelen 2 radial abzustützen. Er gewährleistet schon beim Wickeln der Seelen 2 eine kreisrunde Formgebung, weswegen er so steif wie möglich ausgebildet sein sollte. Aufgrund des kleinen Außendurchmessers des Stützschlauchs, der im Bereich von 1 bis 4 mm, vorzugsweise 2,5 mm, liegt, und der geringen Wanddicke von ca. 0,25 mm, hat die Steifigkeit des Stützschlauchs 1 keinen großen Einfluß auf die erforderliche Flexibilität der gesamten Seilhülle 100. Weitere Voraussetzungen, die der Stützschlauch 1 erfüllen muß, bestehen darin, daß er formstabil und knickbruchstabil ist und eine für den Stützschlauch 1 reibungsarme Oberfläche aufweist. Die letztere Eigenschaft ist wesentlich, um Reibungsverluste zwischen dem Stützschlauch 1 und den Seelen 2 mit Seelenumhüllung 3 zu minimieren. Als besonders geeignetes Material hat sich Ethylenchlortrifluorethylen-Polymer (ECTFE) erwiesen, das z. B. in Schlauchform als "Halar (ECTFE)-Schlauch" über die Firma JFK Isoflour, Neuß, Deutschland, mit der Werkstoffbezeichnung ECTFE 500 / LC erhältlich ist. Es sind jedoch auch andere Fluorpolymere als Stützschlauchmaterial geeignet, z.B. fluoriniertes Ethylenpropylencopolymer (FEP) oder Perfluoralkoxycopolymere (PFA).

Die um den Stützschlauch 1 gewickelten Seelen 2 können herkömmliche Stahldrähte und insbesondere dünne Stahlseile aus einer Mehrzahl von Einzeldrähten sein. Bevorzugt wird jedoch aufgrund der eingangs beschriebenen Vorteile bei Montage, Korrosion und Gewicht ein Faserverbundwerkstoff. In Fig. 4 ist eine solche Seele 2 im Querschnitt dargestellt, bestehend aus einer Matrix 7 mit darin eingebetteten Fasern 6. Vorzugsweise besteht die Matrix 7 des Faserverbundwerkstoffs aus einem Kunststoff wie Epoxid oder Polyester, während die Fasern 6 bzw. Faserbündel durch Glas-, Kohlenstoff-, PEEK- oder Aramidfasern gebildet werden. Als für die Seelen 2 besonders geeignet hat sich eine Kombination aus Epoxid mit Glasfasern herausgestellt, insbesondere, wenn die Seelen mit großer Schlaglänge bzw. großer Windungshöhe gewickelt sind, weil die Glasfasern axiale Kompressionskräfte gut aufnehmen.

Seelen mit einem Durchmesser im Bereich von 0,4 bis 1,5 mm sind im Fahrradbereich einsetzbar, wobei jedoch Seelendurchmesser im Bereich von 0,6 bis 0,8 mm bevorzugt werden. Geringe Seelendurchmesser bedingen höhere Herstellungskosten und führen darüber hinaus zu ungleichmäßigen Kompressionswerten. In anderen Anwendungsbereichen können dickere Seelen verwendet werden. In Verbindung mit Stützschläuchen mit dem oben angegebenen Außendurchmesser von 2,5 mm werden im Falle eines Seelendurchmessers von 0,6 mm vorzugsweise 13 Seelen auf dem Stützschlauch verseilt, während bei einem Seelendurchmesser von 0,8 mm vorzugsweise 10 Seelen um den Stützschlauch gewickelt werden. Dadurch wird eine Windungshöhe von etwa 82 mm.

Eine weitere wesentliche Eigenschaft, die das Seelenmaterial aufweisen muß, besteht in einer rauhen Seelenoberfläche 8 (Fig. 4), um eine rutschfeste Verbindung mit der Seelenumhüllung 3 zu gewährleisten. Geeignet ist ein Rauheitswert im Bereich von Rz = 2 bis Rz = 10, wobei Rz = 6 einen bevorzugten Wert darstellt. Als besonders geeignet hat sich als Seelenmaterial das Glasfaser-Epoxid-Srangmaterial Polystal S6E mit 0,6 mm Durchmesser der Firma Polystal Composits GmbH/Haldensleben, Deutschland, erwiesen. Ebenfalls gut geeignet ist Polystal R8P mit 0,8 mm Durchmesser.

Die Beschichtung der Seelen 2 mit Seelenumhüllungen 3 hat verschiedene Funktionen. Einerseits soll ein Kleben der Seelen am Jacket 4 verhindert werden. Andererseits, und dies trifft insbesondere auf Seelen aus Faserverbundwerkstoff zu, soll der Abrieb zwischen den einzelnen Seelen durch die Umhüllung vermieden werden. Denn ansonsten würde bei intensiver Biegewechselbelastung die Matrix zu Staub zerrieben. Desweiteren wird beim Kürzen der Seilhülle ein Abquetschen des Seelenmaterials durch die Seelenbeschichtung verhindert, so daß es im Falle von Stahlseelen nicht zu Gratbildung kommt und im Falle von Glasfaserseelen nicht zum Ausbröckeln der Matrix führt. Als geeignete Materialien bieten sich Polymere aus der Gruppe PAS, PES, PA, PEEK, LCP oder Verbindungen mit diesen Polymeren an. Bevorzugt werden jedoch PEEK oder Polymerverbindungen mit PEEK, wie PEEK 381G von der Firma Victrex, aufgrund der besonderen Härte dieses Materials. Außerdem läßt sich dieses Material sehr gut in geringen Wandstärken bis hinunter zu 0,05 mm extrudieren. Für die Seilhülle eines Fahrradbowdenzugsystems kann die Seelenumhüllung 3 im Bereich von 0,05 bis 0,25 mm liegen, wobei eine Dicke von 0,1 mm bevorzugt wird.

Die Beschichtung der Seelen 2 mit der polymeren Seelenumhüllung 3 kann durch Koextrusion zum Beispiel im Druckextrusionsverfahren oder im Schlauchextrusionsverfahren erfolgen, wobei die Schlauchextrusion aufgrund der höheren Extrusionsgeschwindigkeit bevorzugt wird. Aufgrund des Abkühlvorgangs und des damit einhergehenden Schrumpfens des extrudierten Materials wird eine Vorspannung erzeugt, die zu einem guten Verbund zwischen Seele 2 und Seelenumhüllung 3 führt. Dieser Verbund verhindert, daß es bei axialer Druckbelastung zu Setzerscheinungen der Seelenumhüllung und einem Ausbröckeln des Glasfaser-Epoxid-Seelenmaterials führt. Solche Erscheinungen würden ein Nachspannen des Bowdenzugsystems erforderlich machen.

Die mit der Seelenumhüllung 3 umhüllten Seelen 2 werden um den Stützschlauch 1 gewickelt und anschließend, gegebenenfalls nach einer Zwischenlagerung, wird wiederum durch Schlauchextrusion die Außenhülle 4 um den Stützschlauch 1 mit den darauf verseilten Seelen 2 koextrudiert. Der Außendurchmesser der Außenhülle 4 liegt im Bereich von 3,4 bis 8 mm und ist für Fahrradbowdenzugsysteme auf 5,1 mm eingespielt. Die Dicke der Außenhülle kann im Bereich von 0,05 bis 1 mm liegen und beträgt vorzugsweise 0,3 bis 0,5 mm. Die Aufgabe der Außenhülle besteht nicht in der Schutzfunktion sondern in der Aufnahme radialer Kräfte, die von den unter Druckbelastung stehenden Seelen übertragen werden. Dennoch muß die Außenhülle flexibel sein. Das für die Außenhülle 4 verwendete Material muß darüberhinaus schlagzäh sein, UV-beständig und Ozon-stabil. Wichtig ist desweiteren, daß das Material nur gering schrumpft, da ein Aufschrumpfen auf die im Inneren angeordneten Seelen unerwünscht ist. Es ist erwünscht, daß das Material gute Gleitreibungseigenschaften besitzt, um Reibungsverluste zwischen der Außenhülle 4 und den Seelenumhüllungen 3 der Seelen 2 gering zu halten. Grundsätzlich wären als Außenhüllenmaterial Fluorpolymere oder Polyurethane insbesondere wegen ihrer UV- und Ozon-Stabilität geeignet. Als besonders geeignetes Material für die Außenhülle 4 hat sich THV 500G von der Firm 3M, Neuss, Deutschland, das über die Firma Dyneon, Burgkirchen, Deutschland, bezogen werden kann. Dabei handelt es sich um einen Thermoplast-Fluorkunststoff.

Erfindungsgemäß ist eine Gleitschicht 5 zwischen der Außenhülle 4 und den Seelen 2 mit der Seelenumhüllung 3 vorgesehen , um Reibungsverluste weiter zu senken. Bevorzugt wird dazu ein reibungsarmes Polymer, vorzugsweise gerecktes Polytetrafluorethylen (ePTFE), welches in US-PS 3,953,566 und 4,187,390 beschrieben ist und eine Dicke von 0,07 und 0,086 mm aufweist. Die Gleitschicht 5 wirkt sich aufgrund ihrer extrem geringen Dicke nicht auf den Gesamtdurchmesser der Seilhülle aus. Dieses Folienmaterial wird vorzugsweise gleichzeitig mit dem Wickeln der Seelen 2 auf dem Stützschlauch 1 im Längseinlauf gewickelt, wobei sich aneinandergrenzende Gleitschichtwicklungen nicht überlappen sollen sondern Stoß an Stoß liegen. Das Umwickeln mit der Gleitschicht gleichzeitig mit dem Wickeln der Seelen 2 auf dem Stützschlauch 1 erleichtert auch die Handhabung des Materials, indem dieses aufgewickelt und zwischengelagert werden kann, bevor es mit der Außenhülle 4 erneut koextrudiert wird.

Durch die soeben beschriebene Seilhülle 100 eines Bowdenzugsystems verläuft im Einsatzfalle ein Seilzug 10 bestehend aus einem Faserbündel 11, üblicherweise einem Drahtseil aus Stahldrähten, mit einer äußeren polymeren Seilbeschichtung 12. Vorzugsweise ist das Polymer für die Seilbeschichtung 12 PEEK oder eine Polymerverbindung mit PEEK. Die Beschichtung des Seils 11 erfolgt im Koextrusionsverfahren, wie im Zusammenhang mit der Herstellung der Seelenumhüllung 3 zuvor beschrieben. Dabei übernimmt die Seilbeschichtung 12 die Aufgabe, die Oberfläche des Drahtseils 11 zu glätten, um eine Langlebigkeit der Gleitflächen zu garantieren. Außerdem dient es dem Zusammenhalt der einzelnen Seildrähte, so daß ein Spleißen der Drähte verhindert werden kann. Durch die Geschwindigkeit des Abkühlvorgangs nach der Extrusion kann die Verbindungsfestigkeit zwischen dem Seil 11 und der Seilbeschichtung 12 in bestimmten Grenzen vorgegeben werden. Eine rauhe Drahtoberfläche ist für eine feste Verbindung zu bevorzugen. Die Härte des Seilbeschichtungsmaterials 12 und die Verbindungsfestigkeit mit dem Seil 11 erlauben es, daß Seilzüge 10 mit PEEK-Beschichtung kein Abisolieren mehr an Klemmstellen erfordern. Für das Material der Seilbeschichtung 12 wird PEEK 381G besonders bevorzugt, das über die Firma Victrex, Hofheim Deutschland, erhältlich ist.

Durch verschiedene Zusätze lassen sich die positiven Eigenschaften des PEEK mit anderen vorteilhaften Eigenschaften kombinieren. So sind PTFE-Zusätze zur Verbesserung der Gleiteigenschaften geeignet. Bei größeren Schichtstärken ist ein Kohlefaserzusatz für die Gleiteigenschaftsverbesserung und ein Glasfaserzusatz für die Härtesteigerung sinnvoll. In dem Material PEEK FC 30 sind die Zusätze PTFE, Kohleund Glasfasern zu jeweils 10 Gew.-% enthalten. Zur Erhöhung der Verschleißfestigkeit bietet sich ein Zusatz von Ceramer® der Firma Ticona, Frankfurt a.M., Deutschland, an, der bis 15 Gew.-%, vorzugsweise 5 Gew.-% beträgt. Ceramer ist ein Polyphenylsulfon - (PPSO) - Polymer.

Das Seil 11 weist vorzugsweise als besondere Eigenschaften eine hohe Zugfestigkeit, geringe Dehnung, Korrosionsbeständigkeit, hohe Biegewechselfestigkeit und für die Beschichtung mit PEEK im Schlauchextrusionsverfahren eine rauhe Oberfläche mit Rz = 0,5 auf. Besonders gute Ergebnisse ließen sich mit einem Edelstahlseil aus dem Werkstoff 1.4401 erzielen. Als Schaltzug für den Fahrradbereich wurde ein Seil der Konstruktion 1 x 19 x 0,18 mit einem Nenndurchmesser von etwa 0,9 mm bevorzugt, das heißt ein Seil mit 19 Drähten und einem Durchmesser von jeweils 0,18 mm.

Zwischen dem Seilzug 10 und der Seilhülle 100 wird vorzugsweise eine rohrförmige Zwischenlage 13 ("Liner") verwendet, die sich über die gesamte Seillänge erstreckt und diese hermetisch umschließt. Sie dient dem Schutz des Seiles vor Schmutz und Feuchtigkeit und verringert die Reibung zwischen dem Seilzug 10 und dem Stützschlauch 1 der Seilhülle 100. Als Material für die Zwischenlage kommt aufgrund der besten Gleiteigenschaften und der geringen Rückstellkräfte ein Schlauch aus Polytetrafluorethylen in Frage. Solche Schläuche sind zum Beispiel über die Firma JFK Isoflour, Neuß, Deutschland, erhältlich.

Die Erfindung wurde ganz allgemein beschrieben mit besonderem Bezug zur Anwendung als Bowdenzugsystem von Fahrrädern, insbesondere für Schaltzüge. Sie sind aber für alle Zweiräder, z.B. Motorräder, oder andere Fahrzeuge und darüberhinaus auch in anderen technischen Gebieten als Bowdenzugsystem einsetzbar. Je nach Abmessung und Belastung des Systems ist es auch nicht notwendig, daß die Seilhülle mehrere Seelen enthält. Die Wicklung mit einer einzigen Seele kann unter Umständen ebenfalls zum gewünschten Erfolg führen. Die in der Beschreibung genannten Abmessungen sind für andere Anwendungsbereiche entsprechend den Anforderungen und Normvorgaben anders zu dimensionieren. Für die Beschichtung des Seilzugs, der Seelen und die Herstellung der Außenhülle können herkömmliche Schneckenextruder Anwendung finden.

## Patentansprüche

1. Seilhülle (100) für Bowdenzugsysteme, umfassend
- einen Stützschlauch (1),
- mindestens eine von einer Seelenumhüllung (3) umgebene strangförmige Seele (2), die um den Stützschlauch (1) gewickelt ist, und
- eine Außenhülle (4), die den Stützschlauch mit der mindestens einen gewickelten Seele (2) konzentrisch umgibt,
**dadurch gekennzeichnet, dass** zwischen der Außenhülle (4) und der um den Stützschlauch (1) gewickelten mindestens einen Seele (2) mit Seelenumhüllung (3) eine Gleitschicht (5) angeordnet ist.

2. Seilhülle nach Anspruch 1, wobei die Seelenumhüllung (3) ein Polymer ausgewählt aus der Gruppe der Polymere Polyacrylsulfon (PAS), Polyester (PES), Polyamid (PA), Polyetheretherketon (PEEK), Liquid Chrystal Polymer (LCP) und Verbindungen mit diesen Polymeren ist.

3. Seilhülle nach Anspruch 1 oder 2, wobei das Polymer PEEK oder eine Polymerverbindung mit PEEK ist.

4. Seilhülle nach einem der Ansprüche 1 bis 3, wobei die Dicke der Seelenumhüllung (3) im Bereich von 0,05 bis 0,25 mm liegt.

5. Seilhülle nach Anspruch 4, wobei die Dicke der Seelen-Umhüllung (3) 0,1 mm beträgt.

6. Seilhülle nach einem der Ansprüche 1 bis 5, wobei die miudestens eine Seele (2) in einer Matrix (7) eingebettete Fasern (6) umfassen.

7. Seilhülle nach Anspruch 6, wobei die Matrix (7) eine Kunststoffmatrix aus Epoxid- oder Polyestermaterial ist.

8. Seilhülle nach Anspruch 7, wobei die Fasern (6) der mindestens einen Seele (2) Glas-, Kohlenstoff-, PEEK- oder Aramidfasern umfässen.

9. Seilhülle nach Anspruch 8, wobei die Fasern (6) der mindestens einen Seele (2) Glasfasern sind.

10. Seilhülle nach einem der Ansprüche 1 bis 9, wobei die mindestens eine Seele (2) eine Seelenoberfläche (8) mit dem Rauheitswert im Bereich von Rz = 2 bis Rz = 10 besitzen.

11. Seilhülle nach Anspruch 10, wobei der Rauheitswert der Seelenoberfläche (8) Rz = 6 ist.

12. Seilhülle nach einem der Ansprüche 1 bis 11, wobei die mindestens eine Seele (2) einen Durchmesser im Bereich von 0,4 bis 1,5 mm aufweist.

13. Seilhülle nach Anspruch 12, wobei der Seelendurchmesser im Bereich von 0,6 bis 0,8 mm liegt.

14. Seilhülle nach einem der Ansprüche 1 bis 13, wobei die Windungshöhe der gewickelten mindestens einen Seele (2) etwa 80 mm beträgt.

15. Seilhülle nach einem der Ansprüche 1 bis 14, wobei der Stützschlauch (1) aus einem Fluorpolymer besteht.

16. Seilhülle nach Anspruch 15, wobei das Fluorpolymer Ethylenchlortrifluorethylen (ECTFE) ist.

17. Seilhülle nach einem der Ansprüche 1 bis 16, wobei der Außendurchmesser des Stützschlauchs (1) im Bereich von 1 bis 4 mm liegt.

18. Seilhülle nach einem der Ansprüche 1 bis 17, wobei das Verhältnis des Außendurchmessers zum Innendurchmesser des Stützschlauchs (1) 2,5:2 beträgt.

19. Seilhülle nach einem der Ansprüche 1 bis 18, wobei die Außenhülle (4) aus Fluorpolymer, Polyurethan oder Polyamid besteht.

20. Seilhülle nach Anspruch 19, wobei die Außenhülle (4) aus einem Fluorthermoplast besteht.

21. Seilhülle nach einem der Ansprüche 1 bis 20, wobei die Außenhülle (4) einen Außendurchmesser von 3,4 bis 8 mm besitzt.

22. Seilhülle nach einem der Ansprüche 1 bis 21, wobei die Dicke der Außenhülle (4) im Bereich von 0,05 bis 1 mm liegt.

23. Seilhülle nach Anspruch 22, wobei die Dicke der Außenhülle (4) im Bereich von 0,3 bis 0,5 mm liegt.

24. Seilhülle nach einem der Ansprüche 1 bis 23, wobei die Gleitschicht (5) aus einem Polymer besteht.

25. Seilhülle nach Anspruch 24, wobei die Gleitschicht (5) aus gerecktem Polytetrafluorethylen (ePTFE) besteht.

26. Seilhülle nach einem der Ansprüche 1 bis 25, wobei die Gleitschicht (5) aus einem in aneinander anstoßender Weise gewickelten Folienmaterial besteht.

27. Seilhülle nach einem der Ansprüche 1 bis 26, wobei die Dicke der Gleitschicht (5) im Bereich von 0,07 und 0,086 mm liegt.

28. Bowdenzugsystem umfassend eine Seilhülle (100) nach einem der Ansprüche 1 bis 27 und einen Seilzug (10).

29. Bowdenzugsystem nach Anspruch 28, wobei der Seilzug (10) ein Seil (11) umfasst, das mit einer Seilumhüllung (12) aus Polymer umgeben ist.

30. Bowdenzugsystem nach Anspruch 29, wobei das Seil (11) aus einem Faserbündel besteht und die Seilumhüllung (12) eine Seilbeschichtung aus PEEK oder aus einer Polymerverbindung mit PEEK ist.

31. Bowdenzugsysteme nach Anspruch 30, wobei das Polymer eine Polymerverbindung aus PEEK mit PTFE ist.

32. Bowdenzugsystem nach einem der Ansprüche 29 bis 31, wobei das Seil (11) aus Edelstahl ist.

33. Bowdenzugsystem nach einem der Ansprüche 29 bis 32, wobei das Seil (11) eine Oberflächenrauhheit von Rz ≥ 0,5 aufweist.

34. Bowdenzugsystem nach einem der Ansprüche 28 bis 33, wobei eine Zwischenlage (13) zwischen der Seilhülle (100) und dem Seilzug (10) vorgesehen ist.

35. Zweirad mit einem Bowdenzugsystem nach einem der Ansprüche 28 bis 34.

36. Verfahren zur Herstellung einer Seilhülle für ein Bowdenzugsystem, umfassend die folgenden Schritte:
a) Zurverfügungstellen mindestens einer strangförmigen Seele (2),
b) Umhüllen der mindestens einen Seele (2) mit einer Seelenumhüllung (3),
c) Wickeln der umhüllten mindestens einen Seele (2) um einen Stützschlauch (1), und
d) Umhüllen des mit der mindestens einen Seele (2) umwickelten Stützschlauchs (1) mit einer Außenhülle (4),
**dadurch gekennzeichnet, dass** vor dem Umhüllten des mit der mindestens einen Seele (2) umwickelten Stützschlauchs (1) mit der Außenhülle (4) (Verfahrensschritt d) der mit der mindestens einen Seele (2) umwickelte Stützschlauch (1) mit einer Gleitschicht (5) versehen wird.

37. Verfahren nach Anspruch 36, wobei das Umhüllen der mindestens einen Seele (2) mit der Seelenumhüllung (3) (Verfahrensschritt b) durch Schlauchextrusion mit einem Polymer erfolgt.

38. Verfahren nach einem der Ansprüche 36 oder 37, wobei die Seelenumhüllung (3) aus PEEK oder einer Polymerverbindung mit PEEK besteht.

39. Verfahren nach einem der Ansprüche 36 bis 38, wobei die mindestens eine Seele so gewickelt wird, dass die Windungshöhe etwa 80 mm beträgt.

40. Verfahren nach einem der Ansprüche 36 bis 39, wobei die zur Verfügung gestellte mindestens eine Seele (2) (Verfahrensschritt a) aus in eine Epoxidmatrix eingebetteten Glasfasern besteht.

41. Verfahren nach einem der Ansprüche 36 bis 40, wobei das Umhüllen des mit der mindestens einen Seele (2) umwickelten Stützschlauchs (1) mit der Außenhülle (4) (Verfahrensschritt d) durch Schlauchextrusion mit einem Polymer erfolgt.

42. Verfahren nach einem der Ansprüche 36 bis 41, wobei das Versehen mit der Gleitschicht (5) durch Umwickeln des mit der mindestens einen Seele (2) umwickelten Stützschlauchs (1) mittels einem polymeren Material in aneinander anstoßender Weise erfolgt.

43. Verfahren nach Anspruch 42, wobei das Umwickeln des mit der mindestens einen Seele (2) umwickelten Stützschlauchs (1) mit der Gleitschicht (5) aus polymerem Material im Längseinlauf gleichzeitig mit dem Umwickeln des Stützschlauchs (1) mit der mindestens einen Seele (2) erfolgt.

## Claims

1. A cable sheath (100) for Bowden cable systems comprising
- a support tube (1),
- at least one stranded core (2) surrounded by a core sheathing (3) and wound round the support tube (1), and
- an outer sheath (4) concentrically surrounding the support tube with the at least one wound core (2),
**characterized in that** a sliding layer (5) is disposed between the outer sheath (4) and the at least one core (2) wound around the support tube (1) and having a core sheathing (3).

2. A cable sheath according to claim 1, wherein the core sheathing (3) is a polymer selected from the group of polymers, polyacrylsulfone (PAS), polyester (PES), polyamide (PA), polyetheretherketone (PEEK), liquid crystal polymer (LCP), and compounds with said polymers.

3. A cable sheath according to claim 1 or 2, wherein the polymer is PEEK or a polymer compound with PEEK.

4. A cable sheath according to any of claims 1 to 3, wherein the thickness of the core sheathing (3) is in the range of 0.05 to 0.25 mm.

5. A cable sheath according to claim 4, wherein the thickness of the core sheathing (3) is 0.1 mm.

6. A cable sheath according to any of claims 1 to 5, wherein the at least one core (2) comprises fibers (6) embedded in a matrix (7).

7. A cable sheath according to claim 6, wherein the matrix (7) is a plastic matrix of epoxy or polyester material.

8. A cable sheath according to claim 7, wherein the fibers (6) of the at least one core (2) comprise fibers of glass, carbon, PEEK or aramid.

9. A cable sheath according to claim 8, wherein the fibers (6) of the at least one core (2) are glass fibers.

10. A cable sheath according to any of claims 1 to 9, wherein the at least one core (2) has a core surface (8) with the roughness value in the range of Rz = 2 to Rz = 10.

11. A cable sheath according to claim 10, wherein the roughness value of the core surface (8) is Rz = 6.

12. A cable sheath according to any of claims 1 to 11, wherein the at least one core (2) has a diameter in the range of 0.4 to 1.5 mm.

13. A cable sheath according to claim 12, wherein the core diameter is in the range of 0.6 to 0.8 mm.

14. A cable sheath according to any of claims 1 to 13, wherein the pitch of the wound at least one core (2) is about 80 mm.

15. A cable sheath according to any of claims 1 to 14, wherein the support tube (1) consists of a fluoropolymer.

16. A cable sheath according to claim 15, wherein the fluoropolymer is ethylene-chlorotrifluoroethylene (ECTFE).

17. A cable sheath according to any of claims 1 to 16, wherein the outside diameter of the support tube (1) is in the range of 1 to 4 mm.

18. A cable sheath according to any of claims 1 to 17, wherein the ratio of the outside diameter to the inside diameter of the support tube (1) is 2.5:2.

19. A cable sheath according to any of claims 1 to 18, wherein the outer sheath (4) consists of fluoropolymer, polyurethane or polyamide.

20. A cable sheath according to claim 19, wherein the outer sheath (4) consists of a fluorothermoplastic.

21. A cable sheath according to any of claims 1 to 20, wherein the outer sheath (4) has an outside diameter of 3.4 to 8 mm.

22. A cable sheath according to any of claims 1 to 21, wherein the thickness of the outer sheath (4) is in the range of 0.05 to 1 mm.

23. A cable sheath according to claim 22, wherein the thickness of the outer sheath (4) is in the range of 0.3 to 0.5 mm.

24. A cable sheath according to any of claims 1 to 23, wherein the sliding layer (5) consists of a polymer.

25. A cable sheath according to claim 24, wherein the sliding layer (5) consists of expanded polytetrafluoroethylene (ePTFE).

26. A cable sheath according to any of claims 1 to 25, wherein the sliding layer (5) consists of a film material wound in mutually abutting fashion.

27. A cable sheath according to any of claims 1 to 26, wherein the thickness of the sliding layer (5) is in the range of 0.07 and 0.086 mm.

28. A Bowden cable system comprising a cable sheath (100) according to any of claims 1 to 27 and a control cable (10).

29. A Bowden cable system according to claim 28, wherein the control cable (10) comprises a cable (11) surrounded by a cable sheathing (12) made of polymer.

30. A Bowden cable system according to claim 29, wherein the cable (11) comprises a fiber bundle, and the cable sheathing (12) is a cable coating made of PEEK or a polymer compound with PEEK.

31. A Bowden cable system according to claim 30, wherein the polymer is a polymer compound of PEEK with PTFE.

32. A Bowden cable system according to any of claims 29 to 31, wherein the cable (11) is made of high-grade steel.

33. A Bowden cable system according to any of claims 29 to 32, wherein the cable (11) has a surface roughness of Rz ≥ 0.5.

34. A Bowden cable system according to any of claims 28 to 33, wherein an interlayer (13) is provided between the cable sheath (100) and the control cable (10).

35. A two-wheeled vehicle having a Bowden cable system according to any of claims 28 to 34.

36. A method for producing a cable sheath for a Bowden cable system comprising the following steps:
a) providing at least one stranded core (2),
b) sheathing the at least one core (2) with a core sheathing (3),
c) winding the sheathed at least one core (2) around a support tube (1), and
d) sheathing the support tube (1) wound round with the at least one core (2) with an outer sheath (4),
**characterized in that** before the support tube (1) wound round with the at least one core (2) is sheathed with the outer sheath (4) (method step d), the support tube (1) wound round with the at least one core (2) is provided with a sliding layer (5).

37. A method according to claim 36, wherein sheathing the at least one core (2) with the core sheathing (3) (method step b) is done by tube extrusion with a polymer.

38. A method according to any of claims 36 or 37, wherein the core sheathing (3) consists of PEEK or a polymer compound with PEEK.

39. A method according to any of claims 36 to 38, wherein the at least one core is so wound that the pitch is about 80 mm.

40. A method according to any of claims 36 to 39, wherein the at least one core (2) provided (method step a) consists of glass fibers embedded in an epoxy matrix.

41. A method according to any of claims 36 to 40, wherein sheathing the support tube (1) wound round with the at least one core (2) with the outer sheath (4) (method step d) is done by tube extrusion with a polymer.

42. A method according to any of claims 36 to 41, wherein providing with the sliding layer (5) is done by winding round the support tube (1) wound round with the at least one core (2), by means of polymeric material in mutually abutting fashion.

43. A method according to claim 42, wherein winding round the support tube (1) wound round with the at least one core (2) with the sliding layer (5) made of polymeric material is done in the long direction simultaneously with winding round the support tube (1) with the at least one core (2).

## Revendications

1. Gaine (100) pour un dispositif de commande par câble comprenant :
- un tube de soutien (1),
- au moins une âme (2) en forme de boyau, enveloppée dans une enveloppe d'âme (3) et enroulée autour dudit tube de soutien (1), et
- une enveloppe extérieure (4) enveloppant de manière concentrique le tube de soutien avec ladite au moins une âme (2) gainée,
**caractérisée en ce qu'**une couche de glissement (5) est disposée entre l'enveloppe extérieure (4) et ladite au moins une âme (2) avec enveloppe d'âme (3) enroulée autour du tube de soutien (1).

2. Gaine selon la revendication 1, l'enveloppe d'âme (3) étant un polymère sélectionné parmi le groupe des polymères polyacrylsulfone (PAS), polyester (PES), polyamide (PA), polyéther éthercétone (PEEC), Liquid Crystal Polymer (LCP) et des combinaisons avec ces polymères.

3. Gaine selon la revendication 1 ou 2, le polymère étant du PEEC ou une combinaison de polyester avec du PEEC.

4. Gaine selon l'une quelconque des revendications 1 à 3, l'épaisseur de l'enveloppe d'âme (3) étant comprise entre 0,05 et 0,25 mm.

5. Gaine selon la revendication 4, l'épaisseur de l'enveloppe d'âme (3) étant de 0,1 mm.

6. Gaine selon l'une quelconque des revendications 1 à 5, ladite au moins une âme (2) comprenant des fibres (6) enrobées dans une matrice (7).

7. Gaine selon la revendication 6, la matrice (7) étant une matrice en matière synthétique composée de résine époxy ou de polyester.

8. Gaine selon la revendication 7, les fibres (6) de ladite au moins une âme (2) comprenant des fibres de verre, de carbone, de PEEC ou d'aramide.

9. Gaine selon la revendication 8, les fibres (6) de ladite au moins une âme (2) étant des fibres de verre.

10. Gaine selon l'une quelconque des revendications 1 à 9, ladite au moins une âme (2) présentant une surface d'âme (8) dont la valeur de rugosité se situe entre Rz = 2 et Rz = 10.

11. Gaine selon la revendication 10, la valeur de rugosité de la surface de l'âme (8) étant Rz = 6.

12. Gaine selon l'une quelconque des revendications 1 à 11, ladite au moins une âme (2) présentant un diamètre se situant entre 0,4 et 1,5 mm.

13. Gaine selon la revendication 12, le diamètre de l'âme se situant entre 0,6 et 0,8 mm.

14. Gaine selon l'une quelconque des revendications 1 à 13, la hauteur des spires de ladite au moins une âme (2) enroulée étant de 80 mm environ.

15. Gaine selon l'une quelconque des revendications 1 à 14, le tube de soutien (1) se composant d'un fluoropolymère.

16. Gaine selon la revendication 15, le fluoropolymère étant de l'éthylène chlorotrifluoroéthylène (ECTFE).

17. Gaine selon l'une quelconque des revendications 1 à 16, le diamètre extérieur du tube de soutien (1) étant compris entre 1 et 4 mm.

18. Gaine selon l'une quelconque des revendications 1 à 17, le rapport entre le diamètre extérieur et le diamètre intérieur du tube de soutien (I) étant 2,5:2.

19. Gaine selon l'une quelconque des revendications 1 à 18, l'enveloppe extérieure (4) étant constituée d'un fluoropolymère, polyuréthane ou d'un polyamide.

20. Gaine selon la revendication 19, l'enveloppe extérieure (4) étant constituée d'un fluorothermoplaste.

21. Gaine selon l'une quelconque des revendications 1 à 20, l'enveloppe extérieure (4) présentant un diamètre de 3,4 à 8 mm.

22. Gaine selon l'une quelconque des revendications 1 à 21, l'épaisseur de l'enveloppe extérieure (4) se situant entre 0,05 et 1 mm.

23. Gaine selon la revendication 22, l'épaisseur de l'enveloppe extérieure (4) se situant entre 0,3 et 0,5 mm.

24. Gaine selon l'une quelconque des revendications 1 à 23, la couche de glissement (5) étant constituée d'un polymère.

25. Gaine selon la revendication 24, la couche de glissement (5) étant constituée de polytétrafluoroéthylène (PTFE) étiré.

26. Gaine selon l'une quelconque des revendications 1 à 25, la couche de glissement (5) étant constituée d'un matériau en feuille enroulé et se juxtaposant.

27. Gaine selon l'une quelconque des revendication 1 à 26, l'épaisseur de la couche de glissement (5) se situant entre 0,07 et 0,086 mm.

28. Dispositif de commande par câble comprenant une gaine (100) selon l'une quelconque des revendications 1 à 27 et un câble sous gaine (10).

29. Dispositif de commande par câble selon la revendication 28, le câble sous gaine (10) comprenant un câble (11) gainé d'une enveloppe (12) en polymère.

30. Dispositif de commande selon la revendication 29, le câble (11) étant constitué d'un faisceau de fibres et l'enveloppe (12) étant constituée d'un revêtement en PEEC ou en une combinaison de polymère et de PEEC.

31. Dispositif de commande par câble selon la revendication 30, le polymère étant une combinaison de polymère constituée de PEEC avec du PTFE.

32. Dispositif de commande par câble selon l'une quelconque des revendications 29 à 31, le câble (11) étant constitué d'acier inoxydable.

33. Dispositif de commande par câble selon l'une quelconque des revendications 29 à 32, le câble (11) présentant une rugosité de surface de Rz ≥ 0,5.

34. Dispositif de commande par câble selon l'une quelconque des revendications 28 à 33, une couche intermédiaire (13) étant prévue entre la gaine (100) et le câble sous gaine (10).

35. Véhicule à deux roues avec un dispositif de commande par câble selon l'une quelconque des revendications 28 à 34.

36. Procédé de fabrication d'une gaine pour un dispositif de commande par câble, comprenant les étapes suivantes :
a) mise à disposition d'au moins une âme (2) en forme de boyau,
b) gainage de la dite au moins une âme (2) à l'aide d'une enveloppe d'âme (3),
c) enroulement de ladite au moins une âme (2) enveloppée, autour d'un tube de soutien (1),
d) gainage du tube de soutien (1) enveloppé avec ladite au moins une âme (2), à l'aide d'une enveloppe extérieure (4).
**caractérisé en ce qu'**avant le gainage du tube de soutien (1) enveloppé avec ladite au moins une âme (2) à l'aide de l'enveloppe extérieure (4) (étape de procédé d), le tube de soutien (1) enveloppé avec ladite au moins une âme (2) est muni d'une couche de glissement (5).

37. Procédé selon la revendication 36, le gainage de ladite au moins une âme (2) avec l'enveloppe d'âme (3) (étape de procédé b) se faisant par soufflage avec un polymère.

38. Procédé selon l'une quelconque des revendications 36 ou 37, l'enveloppe d'âme (3) étant constituée de PEEC ou d'une combinaison de polymère avec du PEEC.

39. Procédé selon l'une quelconque des revendications 36 à 38, ladite au moins une âme étant enroulée de telle sorte que la hauteur des spires est de 80 mm environ.

40. Procédé selon l'une quelconque des revendications 36 à 39, ladite au moins une âme (2) mise à disposition (étape de procédé a) étant constituée de fibres de verre enrobées dans une matrice de résine époxy.

41. Procédé selon l'une quelconque des revendications 36 à 40, le gainage du tube de soutien (1) enveloppé avec ladite au moins une âme (2) à l'aide de l'enveloppe extérieure (4) (étape de procédé d) se faisant par soufflage avec un polymère.

42. Procédé selon l'une quelconque des revendications 36 à 41, la mise en oeuvre de la couche de glissement (5) se faisant par enroulement du tube de soutien (1) enveloppé avec ladite au moins une âme (2), au moyen d'un matériau polymère appliqué par juxtaposition.

43. Procédé selon la revendication 42, l'enroulement du tube de soutien (1) enveloppé avec ladite au moins une âme (2), avec la couche de glissement (5) en matériau polymère dans l'entrée longitudinale se faisant simultanément avec l'enroulement du tube de soutien (1) avec ladite au moins une âme (2).
